# EUROPÄISCHE PATENTSCHRIFT

(11) **EP 3 880 999 B1**
(45) Veröffentlichungstag und Bekanntmachung des Hinweises auf die Patenterteilung: **02.12.2026**
(21) Anmeldenummer: 19805208.6
(22) Anmeldetag: 13.11.2019
(51) Int. Cl.: F16L 37/088

(54) **VERBINDUNGSEINHEIT**
CONNECTION UNIT
UNITÉ DE LIAISON

(30) Priorität: 14.11.2018 DE 102018219440
(43) Veröffentlichungstag der Anmeldung: 22.09.2021
(73) Patentinhaber: Fränkische Industrial Pipes GmbH & Co. KG, 97486 Königsberg (DE)
(72) Erfinder: SCHRÖTER, Sören, 96191 Viereth-Trunstadt (DE)
(74) Vertreter: Weickmann & Weickmann PartmbB
(86) Internationale Anmeldenummer: PCT/EP2019/081105
(87) Internationale Veröffentlichungsnummer: WO 2020/099454

(56) Entgegenhaltungen:
- WO-A1-2018/102213
- WO-A1-2019/126447
- DE-C1- 19 708 377
- US-A1- 2018 266 602
- US-A1- 2019 040 982

## Beschreibung

Die Erfindung betrifft eine Verbindungseinheit zur Verbindung von Fluidleitungen nach dem Oberbegriff des Anspruchs 1.

Beim Verbinden von Fluidleitungen besteht häufig das Problem, dass zum Beispiel ein Monteur nachzuweisen hat, dass er sämtliche Verbindungseinheiten korrekt verbunden hat.

Bisherige Methoden, wie beispielsweise das Erfassen bestimmter Abmessungen der Verbindungseinheiten und/oder das händische Notieren dieses Erfassens, sind zumeist sehr zeitaufwendig und fehleranfällig.

Das Dokument DE 197 08 377 C1 offenbart eine Verbindungseinheit zur Verbindung von Fluidleitungen, wobei ein federvorgespanntes Element bei einer Verbindung der Verbindungseinheit aus einer ersten Position in eine zweite Position verschwenkbar ist. Ferner sei auf die Dokumente WO 2018/102213 A1, US 2018/266602 A1, WO 2019/126447 A1 und US 2019/040982 A1 hingewiesen.

Es ist daher die Aufgabe der vorliegenden Erfindung, eine Verbindungseinheit bereitzustellen, welche eine verbesserte Ablesemöglichkeit, insbesondere unter Verwendung von Scannern, ermöglicht.

Diese Aufgabe wird erfindungsgemäß durch eine Verbindungseinheit zur Verbindung von Fluidleitungen nach Anspruch 1 gelöst.

Dabei ist nicht zwangsläufig eine Sichtbarkeit des Codes notwendig. Beispielsweise kann der Code auf einem RFID-Chip hinterlegt sein, wobei der RFID-Chip derart ausgebildet sein kann, dass er erst bei korrekter Verbindung des ersten Verbindungkörpers mit dem zweiten Verbindungskörper erfassbar ist. So kann der RFID-Chip von einem metallischen Gehäuse umgeben sein, welches dazu eingerichtet ist, den RFID-Chip derart gegenüber einer Außenseite hin abzuschirmen, dass dieser in dem unverbundenen bzw. nicht korrekt verbundenen Zustand der beiden Verbindungskörper nicht erfassbar ist. Dabei kann das metallische Gehäuse in Form eines Aufsatzes an dem Verbindungskörper angebracht werden, welcher den RFID-Chip trägt. Das Gehäuse kann ferner einen Erfassungsabschnitt, zum Beispiel eine Ausnehmung, aufweisen, welcher dazu eingerichtet ist, ein Erfassen des RFID-Chips durch das abschirmende Gehäuse hindurch zu ermöglichen, wenn der RFID-Chip aufgrund einer korrekten Verbindung der beiden Verbindungskörper aus dem nichterfassbaren Zustand in einen erfassbaren Zustand überführt worden ist. Dies kann durch eine Verlagerung des RFID-Chips aus einer durch das Gehäuse abgeschirmten Position in eine dem Erfassungsabschnitt zugeordnete Position und/oder durch "Einschalten" des RFID-Chips, beispielsweise durch Schließen eines Kontakts in einer Leiterbahn des RFID-Chips, realisiert werden.

Als "Verbindungseinheit zur Verbindung von Fluidleitungen" wird hier eine Verbindungseinheit verstanden, welche eine nach außen abgedichtete Fluidverbindung zwischen wenigstens zwei Fluidleitungen herstellen kann.

Insbesondere kann derjenige Abschnitt der Verbindungseinheit, welcher den maschinenlesbaren Code trägt, rotatorisch verlagerbar ausgebildet sein. So kann zum Beispiel in dem Fall, dass der maschinenlesbare Code an dem ersten Verbindungskörper angeordnet ist, der erste Verbindungskörper aus wenigstens zwei Bauteilen aufgebaut sein. Ein erstes Bauteil, welches den maschinenlesbaren Code trägt, kann relativ zu einem zweiten Bauteil des ersten Verbindungkörpers rotierbar gelagert sein oder kann mit dem zweiten Bauteil des ersten Verbindungkörpers in einer Mehrzahl von Winkelpositionen verbindbar sein. So ist es beispielsweise denkbar, dass das zweite Bauteil des ersten Verbindungkörpers in einem Winkelabstand von jeweils 60° Rastpositionen aufweist, über welche das erste Bauteil mit dem zweiten Bauteil, insbesondere unter Ausbildung einer Schnappverbindung, verbunden werden kann. So kann es bei einer durch den ersten Verbindungskörper definierten Fluidleitung, welche gekrümmt verläuft, ermöglicht werden, den maschinenlesbaren Code im Wesentlichen unabhängig von einem Verlauf der gekrümmten Fluidleitung, das heißt einer Montageposition des ersten Verbindungkörpers, ausrichten zu können.

Vorteilhafterweise kann der Code der Verbindungseinheit ein individueller Code, insbesondere ein eindimensionaler oder zweidimensionaler Digitalcode, sein, durch welchen wenigstens einer aus dem ersten und dem zweiten Verbindungskörper, insbesondere die zugehörige Verbindungseinheit, in einer eineindeutigen Weise identifizierbar ist. Beispielsweise kann der Code ein Strichcode oder ein QR-Code, ein einfarbiger Code oder ein mehrfarbiger Code, zum Beispiel in Form einer, insbesondere kreisförmigen, Farbfläche, sein.

Der Code kann als eine Lasermarkierung oder als ein Klebeetikett aufgebracht sein.

Gemäß der Erfindung ist der Code auf einem von dem ersten und dem zweiten Verbindungskörper getrennten Codeelement der Verbindungseinheit angeordnet.

Dabei ist das Codeelement relativ zu dem ersten und/oder dem zweiten Verbindungskörper auf ein, insbesondere vollständiges, Eingreifen des ersten Verbindungskörpers mit dem zweiten Verbindungskörper hin aus einer Nicht-Erfassbarkeitsposition in eine Erfassbarkeitsposition verlagerbar.

Das Codeelement kann dabei dazu eingerichtet sein, genau einmal aus der Nicht-Erfassbarkeitsposition in die Erfassbarkeitsposition zerstörungsfrei verlagerbar zu sein.

Gemäß der Erfindung liegt das Codeelement an einem aus dem ersten und dem zweiten Verbindungskörper bereits vor einem Kontaktieren des ersten Verbindungskörpers mit dem zweiten Verbindungskörper in der Nicht-Erfassbarkeitsposition vor und der Code ist in dieser von einem Abschnitt des jeweiligen Verbindungskörpers verdeckt. Zu diesem Zweck, kann das Codeelement vor einer Verbindung des ersten und des zweiten Verbindungskörpers miteinander in einen Schlitz an einem der Verbindungskörper in die Nicht-Erfassbarkeitsposition eingeschoben werden, so dass es in dieser Position von außen nicht erfassbar, insbesondere nicht sichtbar, ist. Der Schlitz kann sich zum Beispiel in Bewegungsrichtung des Codeelements aus der Nicht-Erfassbarkeitsposition in die Erfassbarkeitsposition über eine größere Länge erstrecken als die Länge des Codeelements, insbesondere über mehr als die doppelte Länge des Codeelements.

Gemäß der Erfindung umfasst das Codeelement eine Federvorrichtung, welche dazu eingerichtet ist, auf eine Krafteinwirkung auf das Codeelement, das Codeelement in einer Einführrichtung des zweiten Verbindungkörpers in den ersten Verbindungskörper aus der Nicht-Erfassbarkeitsposition in die Erfassbarkeitsposition zu verlagern. Dabei kann die Federvorrichtung derart eingerichtet sein, dass kein weiteres Einwirken des anderen Verbindungskörpers zur Verlagerung des Codeelements notwendig ist. Somit kann die Federvorrichtung dazu eingerichtet sein, nach einem Lösen des Codeelements, das Codeelement vollständig aus der Nicht-Erfassbarkeitsposition in die Erfassbarkeitsposition zu verlagern. Auf diese Weise kann verhindert werden, dass sich das Codeelement für eine Dauer, welche ausreichend ist, den Code maschinell zu erfassen, in einer, insbesondere der Nicht-Erfassbarkeitsposition und/oder der Erfassbarkeitsposition benachbarten, Position einer teilweisen Sichtbarkeit befindet, wodurch fehlerhafte Erfassungen der Verbindungseinheit bzw. von wenigstens einem der Verbindungskörper erzeugt werden könnten.

Die Federvorrichtung kann dabei einstückig mit dem Codeelement ausgebildet sein. Das Codeelement und die Federvorrichtung können zum Beispiel als einstückiges Spritzgußteil ausgebildet sein. Insbesondere kann die Federvorrichtung als wenigstens ein elastischer Ring, insbesondere als drei miteinander verbundene elastische Ringe, ausgebildet sein. Dabei können sich das Codeelement und die Federvorrichtung in einer gemeinsamen Ebene erstrecken und vorteilhafterweise eine im Wesentlichen gleiche Dicke von einer Fläche des maschinenlesbaren Codes zu einer entgegengesetzten Seite aufweisen. Die Federvorrichtung kann ferner eine Begrenzungseinrichtung aufweisen, welche dazu eingerichtet ist, eine maximale Kompression und/oder Dehnung der Federvorrichtung zu begrenzen. Die Begrenzungseinrichtung kann beispielsweise durch zwei innerhalb eines elastischen Federrings angeordnete Vorsprünge ausgebildet sein, welche bei einer Kompression in Kontakt treten können.

Anstatt das Codeelement einstückig mit einem beispielsweise aus Kunststoff hergestellten Federelement zu gestalten, kann das Codeelement mit einer, vorteilhafterweise aus Metall gefertigten, separaten Feder versehen sein. Das Codeelement kann dabei an einem kastenförmigen, insbesondere mehrteiligen, Element angeordnet sein, welches in der Nicht-Erfassbarkeitsposition, also bei gespannter Feder bzw. gespannten Federn zusammengeschoben und durch eine Schnappverbindung am jeweiligen Verbindungskörper gesichert ist. Ein Vorsprung an dem jeweiligen anderen Verbindungskörper löst, auf ein Zusammenführen des ersten und des zweiten Verbindungskörpers hin, die Schnappverbindung, zum Beispiel dadurch, dass der Vorsprung einen Arm der Schnappverbindung verlagert. Durch die Feder, welche beispielsweise als eine Mehrzahl von Spiralfedern ausgebildet ist, kann das kastenförmige Element auseinandergedrückt und das Codeelement in die Erfassbarkeitsposition verschoben werden.

Vorteilhafterweise kann ein Verlagerungsweg des Codeelements aus der Nicht-Erfassbarkeitsposition in die Erfassbarkeitsposition größer sein als ein Weg von einer Relativposition des ersten und des zweiten Verbindungskörpers zueinander, in welcher das an dem einen Verbindungskörper angebrachte Codeelement mit dem anderen Verbindungskörper in Kontakt tritt, zu einer Relativposition des ersten und des zweiten Verbindungskörpers zueinander, in welcher sich die beiden Verbindungskörper in einem verbundenen Zustand befinden. Insbesondere kann der Verlagerungsweg des Codeelements um den Faktor 1,5 - 2 größer sein als der oben beschriebene Verlagerungsweg der beiden Verbindungskörper zueinander.

Das Codeelement kann eine Rastvorrichtung umfassen, welche dazu eingerichtet ist, zumindest in der Nicht-Erfassbarkeitsposition mit einer entsprechenden Gegenrastvorrichtung an dem jeweiligen Verbindungskörper in Eingriff zu stehen.

Insbesondere kann einem aus dem ersten und dem zweiten Verbindungskörper das Codeelement zugeordnet sein und dem jeweils anderen aus dem ersten und dem zweiten Verbindungskörper kann ein Anschlag zugeordnet sein, insbesondere damit integral verbunden sein, welcher dazu eingerichtet sein kann, auf ein Eingreifen des ersten Verbindungskörpers mit dem zweiten Verbindungskörper hin das Codeelement aus der Nicht-Erfassbarkeitsposition in die Erfassbarkeitsposition zu verlagern. Natürlich ist es auch denkbar, dass der Anschlag an einem von dem ersten Verbindungskörper und dem zweiten Verbindungskörper getrennten Element ausgebildet ist, welches insbesondere nur auf eine korrekte Verbindung des ersten Verbindungskörpers mit dem zweiten Verbindungskörper hin mit dem Codeelement derart in Kontakt gebracht werden kann, dass das Codeelement "ausgelöst" wird, d.h. eine Verlagerung des Codeelements in die Erfassbarkeitsposition hervorgerufen wird.

Dabei kann der Verbindungskörper, welchem der Anschlag zugeordnet ist, eine Mehrzahl an Anschlägen umfassen, welche insbesondere um einen Außenumfang dieses Verbindungskörpers gleichmäßig verteilt sind. Auf diese Weise können mehrere Steckmöglichkeiten der beiden Verbindungskörper ineinander oder auch nur eine einzige vorbestimmte Steckmöglichkeit der beiden Verbindungskörper ineinander vorgesehen sein. Dabei kann wenigstens ein Anschlag, vorteilhafterweise ein Anschlag, welcher nicht zum Kontakt mit einem zugeordneten Anschlagsabschnitt des Codeelements verwendet wird, als Orientierungseinrichtung und/oder Orientierungssicherung dienen, zum Beispiel indem der Anschlag in eine Nut eingreift, sodass insbesondere durch das Zusammenwirken von Anschlag und Nut eine Rotation der Verbindungskörper relativ zueinander verhindert werden kann.

Das Codeelement kann eine Führungseinrichtung umfassen, welche derart ausgebildet ist, dass das Codeelement in zumindest der Erfassbarkeitsposition eine vorbestimmte Orientierung annimmt. Beispielsweise kann diese Führungseinrichtung als Ausnehmung ausgebildet sein, in welche ein Vorsprung des Codeelements eingreift.

Das Codeelement kann in der Erfassbarkeitsposition, mit Ausnahme des Abschnitts, an welchem der Code angeordnet ist, vollständig von der Verbindungseinheit bzw. dem jeweiligen Verbindungskörper umgeben sein. Dies kann ein Abbrechen des Codeelements oder andere Beschädigungen bzw. Manipulationen am Codeelement verhindern.

Vorteilhafterweise kann/können der erste und/oder der zweite Verbindungskörper einen gekrümmt verlaufenden Fluidkanal in sich ausbilden und der Code an einer Seite der Verbindungseinheit angeordnet sein, welche einer Seite, an welcher ein der Krümmung entsprechender Krümmungsmittelpunkt angeordnet ist, entgegengesetzt ist. Somit kann das Codeelement an einer gekrümmten Verbindungseinheit stets an deren Außenseite in Bezug auf den Krümmungsverlauf angeordnet sein. Dadurch kann eine Erfassbarkeit des Codes verbessert bzw. erleichtert werden.

Im Folgenden wird die Erfindung anhand eines Ausführungsbeispiels mit Bezug auf die begleitenden Zeichnungen beschrieben werden, in welchen
- Figur 1: eine perspektivische Seitenansicht einer Explosionszeichnung einer erfindungsgemäßen Verbindungseinheit darstellt;
- Figur 2a: eine Seitenquerschnittsansicht der erfindungsgemäßen Verbindungseinheit in einer Nicht-Erfassbarkeitsposition darstellt;
- Figur 2b: die Verbindungseinheit aus Figur 2a in einer Seitenansicht darstellt;
- Figur 3a: eine Seitenquerschnittsansicht der erfindungsgemäßen Verbindungseinheit in einer Erfassbarkeitsposition darstellt;
- Figur 3b: die Verbindungseinheit aus Figur 3a in einer Seitenansicht darstellt;
- Figur 3c: eine weitere Seitenquerschnittsansicht der erfindungsgemäßen Verbindungseinheit in der Erfassbarkeitsposition darstellt;
- Figur 4: eine weitere Ausführungsform der erfindungsgemäßen Verbindungseinheit darstellt;
- Figur 5a: eine erste Querschnittsansicht durch die Verbindungseinheit gemäß Figur 4 in einer Nicht-Erfassbarkeitsposition darstellt;
- Figur 5b: eine zweite Querschnittsansicht durch die Verbindungseinheit gemäß Figur 4 in einer Nicht-Erfassbarkeitsposition darstellt;
- Figur 6a: eine zu Figur 5a analoge Querschnittsansicht durch die Verbindungseinheit gemäß Figur 4 in einer Nicht-Erfassbarkeitsposition darstellt, wobei die beiden Verbindungskörper der erfindungsgemäßen Verbindungseinheit teilweise ineinander eingeführt sind;
- Figur 6b: eine zu Figur 5b analoge Querschnittsansicht durch die Verbindungseinheit gemäß Figur 4 in einer Nicht-Erfassbarkeitsposition darstellt, wobei die beiden Verbindungskörper der erfindungsgemäßen Verbindungseinheit teilweise ineinander eingeführt sind;
- Figur 7a: eine zu Figur 5a analoge Querschnittsansicht durch die Verbindungseinheit gemäß Figur 4 in einer Erfassbarkeitsposition darstellt; und
- Figur 7b: eine zu Figur 5b analoge Querschnittsansicht durch die Verbindungseinheit gemäß Figur 4 in einer Erfassbarkeitsposition darstellt.

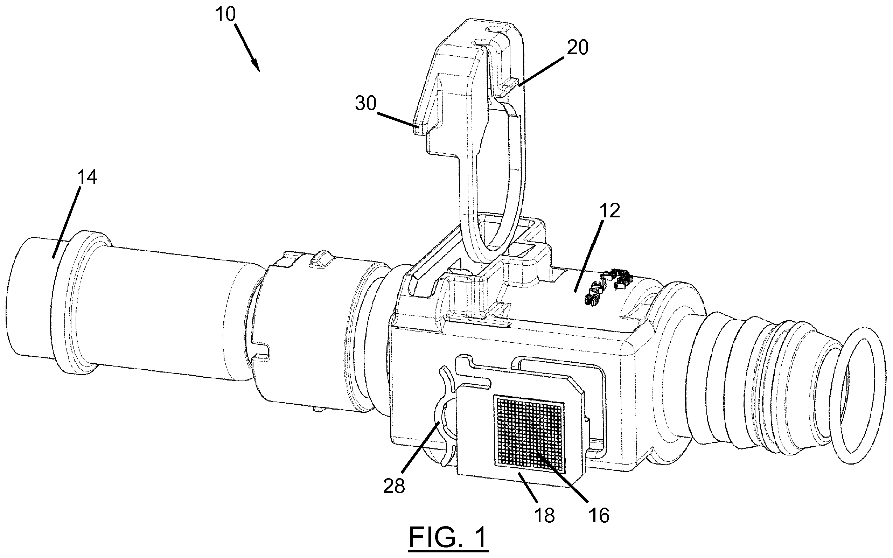

In Figur 1 ist eine erfindungsgemäße Verbindungseinheit allgemein mit dem Bezugszeichen 10 bezeichnet.

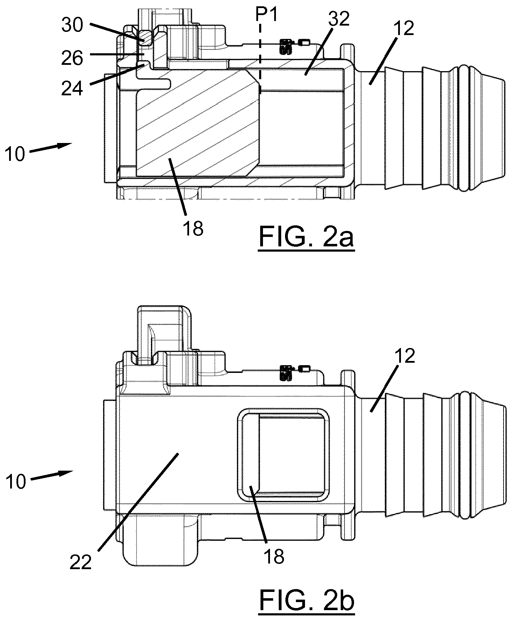

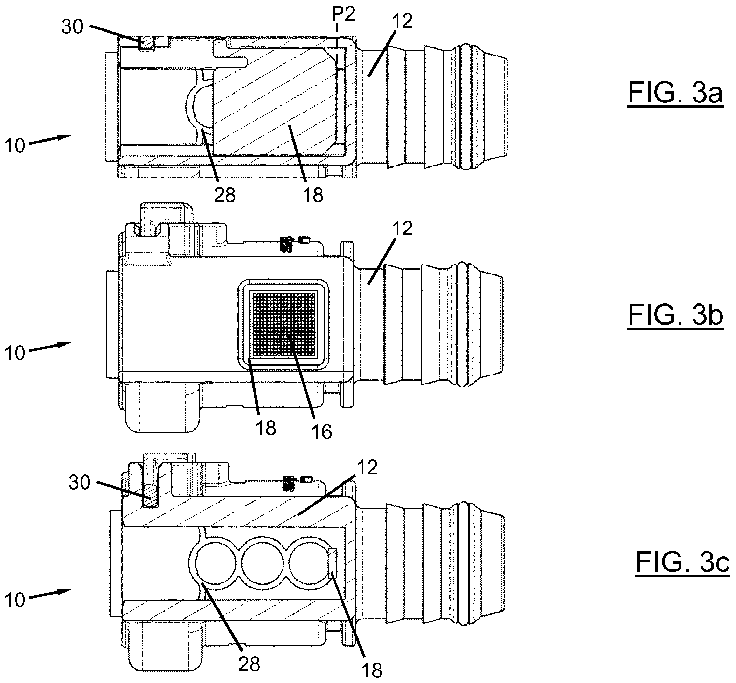

Die Verbindungseinheit umfasst einen ersten Verbindungskörper 12 und einen zweiten Verbindungskörper 14. Die Verbindungseinheit umfasst ferner einen maschinenlesbaren Code 16, welcher in einem unverbundenen Zustand des ersten Verbindungskörpers 12 mit dem zweiten Verbindungskörper 14 nicht erfassbar ist (s. auch Figur 2b) und welcher in einem verbundenen Zustand des ersten Verbindungskörpers 12 mit dem zweiten Verbindungskörper 14 erfassbar, hier sichtbar, ist (s. Figur 3b).

Der Code 16 ist hier ein als eine Lasermarkierung aufgebrachter zweidimensionaler QR-Code.

Ferner ist in Figur 1 zu erkennen, dass der Code 16 auf einem von dem ersten 12 und dem zweiten Verbindungskörper 14 getrennten Codeelement 18 der Verbindungseinheit 10 angeordnet ist.

In Figur 1 ist ferner ein von dem ersten Verbindungskörper 12 und dem zweiten Verbindungskörper 14 getrennt ausgebildetes Halteelement 20 dargestellt, welches auf eine vollständige Verbindung des ersten Verbindungskörpers 12 mit dem zweiten Verbindungskörper 14 hin derart in den ersten Verbindungskörper 12 einführbar ist, dass das Halteelement 20 mit dem Codeelement 18 in Kontakt tritt.

Figuren 2a und 2b zeigen, dass das Codeelement 18 an dem ersten Verbindungskörper 12 bereits vor einem Kontaktieren des ersten Verbindungskörpers 12 mit dem zweiten Verbindungskörper 14 in der Nicht-Erfassbarkeitsposition P1 vorliegt (s. Figur 2a). In dieser Position P1 wird der Code 16 von einem Abschnitt 22 des ersten Verbindungskörpers 12 verdeckt.

Das Codeelement 18 umfasst hier eine Rastvorrichtung 24, welche dazu eingerichtet ist, in der Nicht-Erfassbarkeitsposition P1 mit einer entsprechenden Gegenrastvorrichtung 26 an dem ersten Verbindungskörper 12 in Eingriff zu stehen.

Ferner umfasst das Codeelement 18 eine Federvorrichtung 28 (s. Figuren 1, 3a und 3c), welche dazu eingerichtet ist, das Codeelement 18 aus der Nicht-Erfassbarkeitsposition P1 zu einer Erfassbarkeitsposition P2 (s. Figur 3a) zu verlagern.

Wie in Figur 3c zu erkennen, ist die Federvorrichtung 28 in dem dargestellten Ausführungsbeispiel einstückig mit dem Codeelement 18 ausgebildet und als drei Ringe ausgeführt. Das dem Codeelement 18 entgegengesetzte Ende der Federvorrichtung 28 ist mit dem ersten Verbindungskörper 12 verbunden.

Das Halteelement 20 umfasst einen Anschlag 30, welcher dazu eingerichtet ist, mit dem Codeelement 18 in Kontakt zu treten, um die Rastvorrichtung 24 des Codeelements 18 aus der Gegenrastvorrichtung 26 zu lösen.

Das Codeelement 18 umfasst zudem eine Führungseinrichtung 32 (s. Figur 2a), welche derart ausgebildet ist, dass das Codeelement 18 in zumindest der Erfassbarkeitsposition P2 eine vorbestimmte Orientierung annimmt.

In Figur 3b ist zu sehen, dass das Codeelement 18 in der Erfassbarkeitsposition P2, mit Ausnahme des Abschnitts, an welchem der Code 16 angeordnet ist, vollständig von der ersten Verbindungseinheit 12 umgeben ist.

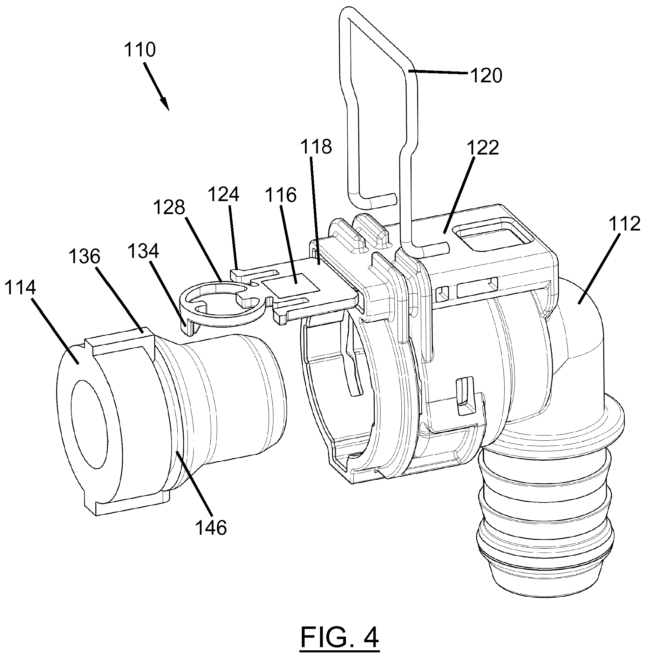

In Figur 4 ist nun eine weitere Ausführungsform 110 der erfindungsgemäßen Verbindungseinheit dargestellt. Allgemein sei in Bezug auf die Verbindungseinheit 110 darauf verwiesen, dass sämtliche Vorteile, Effekte und Merkmale der Verbindungseinheit 10 auch auf die Verbindungseinheit 110 anwendbar sein können, und umgekehrt, so dass zu der Verbindungseinheit 10 analoge Komponenten der Verbindungseinheit 110 mit analogen Bezugszeichen beschrieben werden, jedoch erhöht um die Zahl 100.

Die Verbindungseinheit 110 umfasst einen ersten Verbindungskörper 112 und einen zweiten Verbindungskörper 114, welche miteinander verbindbar sind, um jeweilige darin definierte Fluidkanäle miteinander zu verbinden. Mit dem ersten Verbindungskörper 112 ist ein Codeelement 118 verbunden, welches einen maschinenlesbaren Code 116 aufweist. Das Codeelement 118 weist einstückig daran ausgebildet eine Federvorrichtung 128 auf, welche aus einem elastischen Ring gebildet ist. An einem dem Code 116 entgegengesetzten Ende weist die Federvorrichtung 128 einen Anschlagsabschnitt 134 auf, welcher dazu eingerichtet ist, bei einem Einführen des zweiten Verbindungkörpers 114 in den ersten Verbindungskörper 112 mit einem Anschlag 136 des zweiten Verbindungkörpers 114 in Kontakt zu treten. An beiden Längsseiten des Codeelements 118 erstrecken sich federnd gelagerte Rastvorrichtungen 124. Die in Figur 4 dargestellte Ausführungsform der Verbindungseinheit 110 weist ferner ein Halteelement 120 auf, welches dazu dient, den ersten Verbindungskörper 112 und den zweiten Verbindungskörper 114 in einem korrekt miteinander verbundenen Zustand aneinander zu sichern.

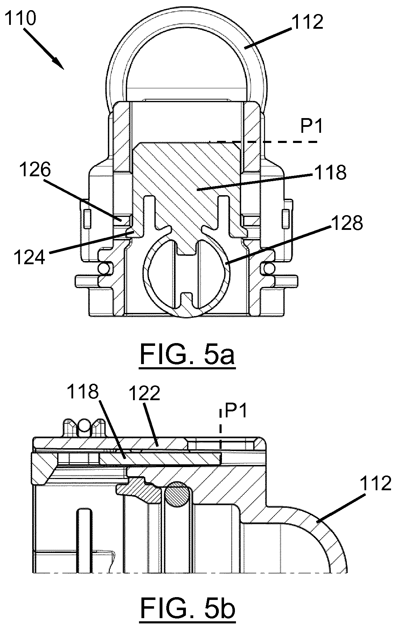

In Figur 5a ist das Codeelement 118 in einer Nicht-Erfassbarkeitsposition P1 an dem ersten Verbindungskörper 112 dargestellt. Dabei sind die Rastvorrichtungen 124 im Eingriff mit entsprechenden Gegenrastvorrichtungen 126. Die Federvorrichtung 128 ist in einem unbelasteten und nicht vorgespannten Zustand. In dieser Nicht-Erfassbarkeitsposition P1 verdeckt ein Abschnitt 122 des ersten Verbindungkörpers 112 den an dem Codeelement 118 angeordneten Code 116, so dass dieser von einer Außenseite her nicht erfassbar ist (siehe Figur 5b).

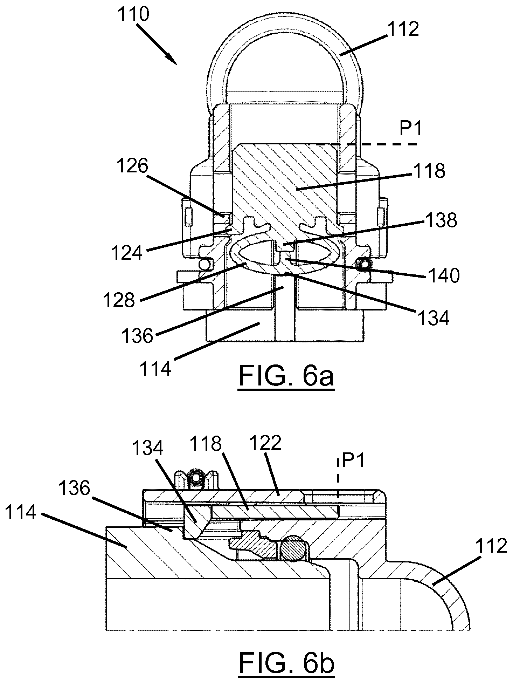

Wird nun der zweite Verbindungskörper 114 in den ersten Verbindungskörper 112 eingeführt, wie in Figuren 6a und 6b dargestellt, so tritt der Anschlag 136 des zweiten Verbindungkörpers 114 mit dem Anschlagsabschnitt 134 des Codeelements 118 bzw. der Federvorrichtung 128 davon in Kontakt. Auf ein weiteres Einführen des zweiten Verbindungkörpers 114 in den ersten Verbindungkörper 112 hin wird die Federvorrichtung 128 des Codeelements 118 derart vorbelastet, dass der elastische Ring in ein sich hauptsächlich quer zu einer Einführrichtung des zweiten Verbindungkörpers 114 in den ersten Verbindungskörper 112 erstreckendes Oval komprimiert wird. Bei einer maximalen Kompression des elastischen Rings der Federvorrichtung 128 kontaktieren sich zwei gegenüberliegende Flächen, welche in der dargestellten Ausführungsform an zwei, in Bezug auf den elastischen Ring, nach innen vorstehenden Vorsprüngen 138 und 140 angeordnet sind, um eine weitere Kompression der Federvorrichtung 128 zu verhindern.

Während der Vorbelastung der Federvorrichtung 128 verbleibt das Codeelement 118 in der Nicht-Erfassbarkeitsposition P1, so dass der Code 116 durch den Abschnitt 122 verdeckt bleibt. Dies kann beispielsweise dadurch erreicht werden, dass eine durch die Rastvorrichtungen 124 in Zusammenwirkung mit den Gegenrastvorrichtungen 126 auf das Codeelement 118 ausgeübte Haltekraft größer ist als eine durch die Federvorrichtung 128 ausgeübte Rückstellkraft.

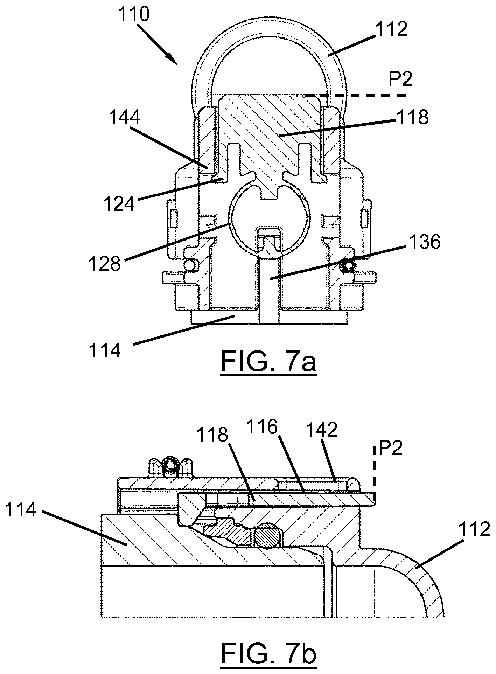

Bei einer Verlagerung des zweiten Verbindungkörpers 114 über den in den Figuren 6a und 6b dargestellten Punkt hinaus wird das Codeelement 118 im Sinne eines starren Körpers, da die Federvorrichtung 128 durch das Kontaktieren der beiden Vorsprünge 138 und 140 überbrückt ist, aus der Nicht-Erfassbarkeitsposition P1 derart heraus gedrängt, dass die Rastvorrichtungen 124 im Anschlag gegen die Gegenrastvorrichtungen 126 nach radial innen verlagert werden. Wenn die Rastvorrichtungen 124 ausreichend verlagert worden sind, um sich von den Gegenrastvorrichtungen 126 zu lösen, übt die Rückstellkraft der Federvorrichtung 128 eine Kraft auf den den Code 116 tragenden Abschnitt des Codeelements 118 aus, so dass dieser Abschnitt in eine Erfassbarkeitsposition P2 verlagert wird, welche in den Figuren 7a und 7b zu sehen ist.

In dieser Erfassbarkeitsposition P2 ist der Code 116 derart relativ zu einem Ausschnitt 142 des ersten Verbindungkörpers 112 angeordnet, dass der Code 116 von einer Außenseite der Verbindungseinheit 110 her erfassbar ist. Um hierfür in einer vorbestimmten Weise festlegen zu können, dass das Codeelement 118 die Erfassbarkeitsposition P2 einnimmt, können die Rastvorrichtungen 124 mit weiteren Gegenrastvorrichtungen 144 in Kontakt treten, welche dazu eingerichtet sind, eine Verlagerung des Codeelements 118 über die Erfassbarkeitsposition P2 hinaus zu verhindern. Insbesondere kann ferner die Federvorrichtung 128 in der Erfassbarkeitsposition P2 des Codeelements 118 in einem im Wesentlichen entspannten Zustand mit dem Anschlag 136 des zweiten Verbindungkörpers 114 verbleiben, um aufgrund der Federwirkung der Federvorrichtung 128 eine Verlagerung des Codeelements 118 aus der Erfassbarkeitsposition P2 in Richtung der Nicht-Erfassbarkeitsposition P1 zu verhindern.

Ist der zweite Verbindungskörper 114 in der vorbestimmten korrekten Weise in den ersten Verbindungskörper 112 eingeführt, so kann das bügelartige Halteelement 120 auf den ersten Verbindungskörper 112 aufgesetzt werden, wobei es zugleich in eine Nut 146 des zweiten Verbindungkörpers 114 (siehe Figur 4) eingreift, um den zweiten Verbindungskörper 114 an dem ersten Verbindungskörper 112 zu sichern.

## Patentansprüche

1. Verbindungseinheit (10, 110) zur Verbindung von Fluidleitungen,
wobei die Verbindungseinheit (10, 110) einen ersten Verbindungskörper (12, 112), welcher dazu eingerichtet ist, mit einer ersten, nicht zu der Verbindungseinheit (10, 110) gehörenden, Fluidleitung verbunden zu werden, und einen zweiten Verbindungskörper (14, 114) umfasst, welcher dazu eingerichtet ist, mit einer zweiten, nicht zu der Verbindungseinheit (10, 110) gehörenden, Fluidleitung verbunden zu werden, und
wobei der erste Verbindungskörper (12, 112) und der zweite Verbindungskörper (14, 114) dazu eingerichtet sind, miteinander derart verbunden zu werden, dass eine Fluidverbindung zwischen den beiden Fluidleitungen hergestellt ist,
wobei die Verbindungseinheit (10, 110) ferner einen maschinenlesbaren Code (16, 116) umfasst,
wobei der Code (16, 116) auf einem von dem ersten (12, 112) und dem zweiten (14, 114) Verbindungskörper getrennten Codeelement (18, 118) der Verbindungseinheit (10, 110) angeordnet ist,
wobei das Codeelement (18, 118) relativ zu dem ersten (12, 112) und/oder dem zweiten (14, 114) Verbindungskörper auf ein, insbesondere vollständiges, Eingreifen des ersten Verbindungskörpers (12, 112) mit dem zweiten Verbindungskörper (14, 114) hin aus einer Nicht-Erfassbarkeitsposition (P1) in eine Erfassbarkeitsposition (P2) verlagerbar ist, sodass der Code (16, 116) in einem unverbundenen Zustand des ersten Verbindungskörpers (12, 112) mit dem zweiten Verbindungskörper (14, 114) nicht erfassbar ist und in einem verbundenen Zustand des ersten Verbindungskörpers (12, 112) mit dem zweiten Verbindungskörper (14, 114) erfassbar ist, insbesondere von einer Außenseite der Verbindungseinheit (10, 110) her erfassbar ist, und wobei das Codeelement (18, 118) eine Federvorrichtung (28, 128) umfasst, welche dazu eingerichtet ist, auf eine Krafteinwirkung auf das Codeelement (18, 118), das Codeelement (18, 118) aus der Nicht-Erfassbarkeitsposition (P1) in die Erfassbarkeitsposition (P2) zu verlagern,
wobei das Codeelement (18, 118) an einem aus dem ersten (12, 112) und dem zweiten (14, 114) Verbindungskörper bereits vor einem Kontaktieren des ersten Verbindungskörpers (12, 112) mit dem zweiten Verbindungskörper (14, 114) in der Nicht-Erfassbarkeitsposition (P1) vorliegt und der Code (16, 116) in dieser von einem Abschnitt (22, 122) des jeweiligen Verbindungskörpers (12, 112, 14, 114) verdeckt ist.

2. Verbindungseinheit (10, 110) nach Anspruch 1,
**dadurch gekennzeichnet, dass** der Code (16, 116) der Verbindungseinheit (10, 110) ein individueller Code (16, 116), insbesondere ein eindimensionaler oder zweidimensionaler Digitalcode, ist, durch welchen wenigstens einer aus dem ersten (12, 112) und dem zweiten (14, 114) Verbindungskörper, insbesondere die zugehörige Verbindungseinheit (10, 110), in einer eineindeutigen Weise identifizierbar ist.

3. Verbindungseinheit (10, 110) nach Anspruch 1 oder 2,
**dadurch gekennzeichnet, dass** der Code (16, 116) als eine Lasermarkierung oder als ein Klebeetikett aufgebracht ist.

4. Verbindungseinheit (10, 110) nach einem der Ansprüche 1 bis 3,
**dadurch gekennzeichnet, dass** die Federvorrichtung (28, 128) einstückig mit dem Codeelement (18, 118) ausgebildet ist.

5. Verbindungseinheit (10, 110) nach einem der Ansprüche 1 bis 4,
**dadurch gekennzeichnet, dass** ein Verlagerungsweg des Codeelements (18, 118) aus der Nicht-Erfassbarkeitsposition (P1) in die Erfassbarkeitsposition (P2) größer ist als ein Weg von einer Relativposition des ersten (12, 112) und des zweiten (14, 114) Verbindungskörpers zueinander, in welcher das an dem einen Verbindungskörper (12, 112) angebrachte Codeelement (18, 118) mit dem anderen Verbindungskörper (14, 114) in Kontakt tritt, zu einer Relativposition des ersten (12, 112) und des zweiten (14, 114) Verbindungskörpers zueinander, in welcher sich die beiden Verbindungskörper (12, 112, 14, 114) in einem verbundenen Zustand befinden.

6. Verbindungseinheit (10, 110) nach einem der Ansprüche 1 bis 5,
**dadurch gekennzeichnet, dass** das Codeelement (18, 118) eine Rastvorrichtung (24, 124) umfasst, welche dazu eingerichtet ist, zumindest in der Nicht-Erfassbarkeitsposition (P1) mit einer entsprechenden Gegenrastvorrichtung (26, 126) an dem jeweiligen Verbindungskörper (12, 112) in Eingriff zu stehen.

7. Verbindungseinheit (10, 110) nach einem der Ansprüche 1 bis 6,
**dadurch gekennzeichnet, dass** einem aus dem ersten (12, 112) und dem zweiten (14, 114) Verbindungskörper das Codeelement (18, 118) zugeordnet ist und dem jeweils anderen aus dem ersten (12, 112) und dem zweiten (14, 114) Verbindungskörper oder einem von den beiden Verbindungskörpern (12, 112, 14, 114) getrennten Element (20, 120) ein Anschlag (30, 136) zugeordnet ist, insbesondere damit integral verbunden ist, welcher dazu eingerichtet ist, auf ein Eingreifen des ersten Verbindungskörpers (12, 112) mit dem zweiten Verbindungskörper (14, 114) hin das Codeelement (18, 118) aus der Nicht-Erfassbarkeitsposition (P1) in die Erfassbarkeitsposition (P2) zu verlagern.

8. Verbindungseinheit (10, 110) nach Anspruch 7,
**dadurch gekennzeichnet, dass** der Verbindungskörper (14, 114), welchem der Anschlag (30, 136) zugeordnet ist, eine Mehrzahl an Anschlägen (30, 136) umfasst, welche insbesondere um einen Außenumfang dieses Verbindungskörpers (14, 114) gleichmäßig verteilt sind.

9. Verbindungseinheit (10, 110) nach einem der Ansprüche 1 bis 8,
**dadurch gekennzeichnet, dass** das Codeelement (18, 118) eine Führungseinrichtung (32) umfasst, welche derart ausgebildet ist, dass das Codeelement (18, 118) in zumindest der Erfassbarkeitsposition (P2) eine vorbestimmte Orientierung annimmt.

10. Verbindungseinheit (10, 110) nach einem der Ansprüche 1 bis 9,
**dadurch gekennzeichnet, dass** das Codeelement (18, 118) in der Erfassbarkeitsposition (P2), mit Ausnahme des Abschnitts, an welchem der Code (16, 116) angeordnet ist, vollständig von der Verbindungseinheit (10, 110) bzw. dem jeweiligen Verbindungskörper (12, 112) umgeben ist.

11. Verbindungseinheit (10, 110) nach einem der Ansprüche 1 bis 10,
**dadurch gekennzeichnet, dass** der erste (12, 112) und/oder der zweite (14, 114) Verbindungskörper einen gekrümmt verlaufenden Fluidkanal in sich ausbilden/ausbildet und der Code (16, 116) an einer Seite der Verbindungseinheit (10, 110) angeordnet ist, welche einer Seite, an welcher ein der Krümmung entsprechender Krümmungsmittelpunkt angeordnet ist, entgegengesetzt ist.

## Claims

1. Connection unit (10, 110) for connecting fluid lines,
wherein the connection unit (10, 110) comprises a first connection body (12, 112) which is designed to be connected to a first fluid line not belonging to the connection unit (10, 110), and a second connection body (14, 114) which is designed to be connected to a second fluid line not belonging to the connection unit (10, 110), and
wherein the first connection body (12, 112) and the second connection body (14, 114) are designed to be connected to one another such that a fluid connection is established between the two fluid lines,
wherein the connection unit (10, 110) further comprises a machine-readable code (16, 116),
wherein the code (16, 116) is arranged on a code element (18, 118) of the connection unit (10, 110) that is separate from the first (12, 112) and the second (14, 114) connection body,
wherein the code element (18, 118) is displaceable relative to the first (12, 112) and/or the second (14, 114) connection body from a non-detectable position (P1) to a detectable position (P2) upon an in particular complete engagement of the first connection body (12, 112) with the second connection body (14, 114), so that the code (16, 116) is not detectable in an unconnected state of the first connection body (12, 112) with the second connection body (14, 114) and is detectable in a connected state of the first connection body (12, 112) with the second connection body (14, 114), in particular detectable from an outer side of the connection unit (10, 110), and
wherein the code element (18, 118) comprises a spring device (28, 128) which is designed to displace the code element (18, 118) from the non-detectable position (P1) to the detectable position (P2) when a force acts on the code element (18, 118),
wherein the code element (18, 118) on one of the first (12, 112) and the second (14, 114) connection body is already in the non-detectable position (P1) before the first connection body (12, 112) makes contact with the second connection body (14, 114) and the code (16, 116) is covered in this position by a portion (22, 122) of the relevant connection body (12, 112, 14, 114).

2. Connection unit (10, 110) according to claim 1,
**characterised in that** the code (16, 116) of the connection unit (10, 110) is an individual code (16, 116), in particular a one-dimensional or two-dimensional digital code, by means of which at least one of the first (12, 112) and the second (14, 114) connection body, in particular the associated connection unit (10, 110), can be identified in an unambiguous manner.

3. Connection unit (10, 110) according to claim 1 or 2,
**characterised in that** the code (16, 116) is applied as a laser marking or as an adhesive label.

4. Connection unit (10, 110) according to any of claims 1 to 3,
**characterised in that** the spring device (28, 128) is integral with the code element (18, 118).

5. Connection unit (10, 110) according to any of claims 1 to 4,
**characterised in that** a displacement path of the code element (18, 118) from the non-detectable position (P1) to the detectable position (P2) is greater than a path from a relative position of the first (12, 112) and the second (14, 114) connection body to one another in which the code element (18, 118) attached to one connection body (12, 112) comes into contact with the other connection body (14, 114), to a relative position of the first (12, 112) and the second (14, 114) connection body to one another in which the two connection bodies (12, 112, 14, 114) are in a connected state.

6. Connection unit (10, 110) according to any of claims 1 to 5,
**characterised in that** the code element (18, 118) comprises a latching device (24, 124) which is designed to be in engagement with a corresponding counter-latching device (26, 126) on the relevant connection body (12, 112) at least in the non-detectable position (P1).

7. Connection unit (10, 110) according to any of claims 1 to 6,
**characterised in that** the code element (18, 118) is assigned to one of the first (12, 112) and the second (14, 114) connection body and a stop (30, 136) is assigned to, in particular is integral with, the other one of the first (12, 112) and the second (14, 114) connection body or an element (20, 120) that is separate from the two connection bodies (12, 112, 14, 114), said stop (30, 136) being designed to displace the code element (18, 118) from the non-detectable position (P1) to the detectable position (P2) when the first connection body (12, 112) engages with the second connection body (14, 114).

8. Connection unit (10, 110) according to claim 7,
**characterised in that** the connection body (14, 114) to which the stop (30, 136) is assigned comprises a multiplicity of stops (30, 136) which are in particular evenly distributed around an outer circumference of said connection body (14, 114).

9. Connection unit (10, 110) according to any of claims 1 to 8,
**characterised in that** the code element (18, 118) comprises a guide device (32) which is designed such that the code element (18, 118) assumes a predetermined orientation in at least the detectable position (P2).

10. Connection unit (10, 110) according to any of claims 1 to 9,
**characterised in that**, in the detectable position (P2), the code element (18, 118) is completely surrounded by the connection unit (10, 110) or the relevant connection body (12, 112), with the exception of the portion on which the code (16, 116) is arranged.

11. Connection unit (10, 110) according to any of claims 1 to 10,
**characterised in that** the first (12, 112) and/or the second (14, 114) connection body inherently forms/form a curved fluid channel and the code (16, 116) is arranged on a side of the connection unit (10, 110) which is opposite to a side on which a centre of curvature corresponding to the curvature is arranged.

## Revendications

1. Une unité de connexion (10, 110) destinée à connecter des conduites de fluide, dans lequel l'unité de connexion (10, 110) comprend un premier corps de connexion (12, 112), qui est agencé pour être connecté à une première conduite de fluide (10, 110) ne faisant pas partie de l'unité de connexion (10, 110), et un deuxième corps de connexion (14, 114) qui est agencé pour être connecté à une deuxième conduite de fluide ne faisant pas partie de l'unité de connexion (10, 110), et
dans lequel le premier corps de connexion (12, 112) et le deuxième corps de connexion (14, 114) sont agencés pour être connectés l'un à l'autre de telle sorte qu'une communication de fluide soit établie entre les deux conduites de fluide, dans lequel l'unité de connexion (10, 110) comprend en outre un code lisible par machine (16, 116),
dans lequel ledit code (16, 116) est porté sur un élément de code (18, 118) de l'unité de connexion (10, 110) distinct du premier (12, 112) et du deuxième (14, 114) corps de connexion de l'unité de connexion (10, 110),
dans lequel l'élément de code (18, 118) peut être déplacé par rapport au premier (12, 112) et/ou au deuxième (14, 114) corps de connexion, à la suite d'un engagement, notamment complet, du premier corps de connexion (12, 112) avec le deuxième corps de connexion (14, 114), de passer d'une position de non-détectabilité (P1) à une position de détectabilité (P2), de sorte que le code (16, 116) n'est pas détectable lorsque le premier corps de connexion (12, 112) n'est pas connecté au deuxième corps de connexion (14, 114) et est détectable lorsque le premier corps de connexion (12, 112) est connecté au deuxième corps de connexion (14, 114), détectable, en particulier depuis un côté extérieur de l'unité de connexion (10, 110), et dans lequel l'élément de code (18, 118) comprend un dispositif à ressort (28, 128) qui est agencé pour, en réponse à l'application d'une force sur l'élément de code (18, 118), déplacer l'élément de code (18, 118) de la position de non-détectabilité (P1) vers la position de détectabilité (P2),
dans lequel l'élément de code (18, 118) sur l'un parmi le premier (12, 112) et le deuxième (14, 114) corps de connexion, se trouve déjà dans la position de non-détectabilité (P1) avant même que le premier corps de connexion (12, 112) n'entre en contact avec le deuxième corps de connexion (14, 114) et dans lequel le code (16, 116) y est masqué par une partie (22, 122) du corps de connexion concerné (12, 112, 14, 114).

2. L'unité de connexion (10, 110) selon la revendication 1,
**caractérisée en ce que** le code (16, 116) de l'unité de connexion (10, 110) est un code individuel (16, 116), notamment un code numérique unidimensionnel ou bidimensionnel, grâce auquel au moins l'un parmi le premier (12, 112) et le deuxième (14, 114) corps de connexion, en particulier l'unité de connexion associée (10, 110), peut être identifié de manière univoque.

3. L'unité de connexion (10, 110) selon la revendication 1 ou 2,
**caractérisée en ce que** le code (16, 116) est appliqué sous la forme d'un marquage au laser ou d'une étiquette adhésive.

4. L'unité de connexion (10, 110) selon l'une des revendications 1 à 3,
**caractérisée en ce que** le dispositif à ressort (28, 128) est formé en une pièce avec l'élément de code (18, 118).

5. L'unité de connexion (10, 110) selon l'une des revendications 1 à 4,
**caractérisée en ce qu'**une course de déplacement de l'élément de code (18, 118) de la position de non-détectabilité (P1) à la position de détectabilité (P2) est supérieure à une course entre une position relative des premier (12, 112) et deuxième (14, 114) corps de connexion l'un par rapport à l'autre, dans laquelle l'élément de code (18, 118) fixé audit un corps de connexion (12, 112) entre en contact avec l'autre corps de connexion (14, 114), jusqu'à une position relative du premier (12, 112) et du deuxième (14, 114) corps de connexion l'un par rapport à l'autre, dans lequel les deux corps de connexion (12, 112, 14, 114) se trouvent dans un état connecté.

6. L'unité de connexion (10, 110) selon l'une des revendications 1 à 5,
**caractérisée en ce que** l'élément de code (18, 118) comprend un dispositif d'enclenchement (24, 124) qui est agencé pour s'engager, au moins dans la position de non-détectabilité (P1), avec un dispositif d'enclenchement correspondant (26, 126) sur le corps de connexion respectif (12, 112).

7. L'unité de connexion (10, 110) selon l'une des revendications 1 à 6,
**caractérisée en ce que** l'élément de code (18, 118) est associé à l'un parmi le premier (12, 112) et le deuxième corps de connexion (14, 114) et **en ce qu'**une butée (30, 136) est associé à l'autre parmi le premier (12, 112) et le deuxième corps de connexion (14, 114) ou à un élement (20, 120) distinct des deux corps de connexion (12, 112, 14, 114), notamment solidaire de celui-ci, et qui est agencée pour réagir à l'engagement du premier corps de connexion (12, 112) avec le deuxième corps de connexion (14, 114) pour déplacer l'élément de code (18, 118) de la position de non-détectabilité (P1) vers la position de détectabilité (P2).

8. L'unité de connexion (10, 110) selon la revendication 7,
**caractérisée en ce que** le corps de connexion (14, 114), auquel est associée la butée (30, 136), comprend une pluralité de butées (30, 136) qui sont notamment réparties de manière uniforme sur une périphérie extérieure de ce corps de connexion (14, 114).

9. L'unité de connexion (10, 110) selon l'une des revendications 1 à 8,
**caractérisée en ce que** l'élément de code (18, 118) comprend un dispositif de guidage (32) qui est conçu de telle sorte que l'élément de code (18, 118) adopte une orientation prédéterminée au moins dans la position de détectabilité (P2).

10. L'unité de connexion (10, 110) selon l'une des revendications 1 à 9,
**caractérisée en ce que**, dans la position de détectabilité (P2), l'élément de code (18, 118) est entièrement entouré par l'unité de connexion (10, 110) ou par le corps de connexion correspondant (12, 112), à l'exception de la partie sur laquelle est disposé le code (16, 116).

11. L'unité de connexion (10, 110) selon l'une des revendications 1 à 10,
**caractérisée en ce que** le premier (12, 112) et/ou le deuxième (14, 114) corps de connexion forment en leur sein un canal de fluide s'étendant de manière courbée et que le code (16, 116) est disposé sur un côté de l'unité de connexion (10, 110) qui est opposé à un côté sur lequel est situé un centre de courbure correspondant à ladite courbure.
